# EUROPEAN PATENT APPLICATION

(11) **EP 4 535 469 A1**
(43) Date of publication of application: **09.04.2025**
(21) Application number: 23835108.4
(22) Date of filing: 14.03.2023
(51) Int. Cl.: H01M 8/04746, H01M 8/04225, H01M 8/043, H01M 8/04302, H01M 8/0432, H01M 8/04537, H01M 8/04858, H01M 8/10

(54) **FUEL CELL SYSTEM**

(30) Priority: 08.07.2022 JP 2022110711
(71) Applicant: BROTHER KOGYO KABUSHIKI KAISHA, Nagoya-shi, Aichi 467-8561 (JP)
(72) Inventor: TANNO, Norihiko, Nagoya-shi, Aichi 467-8562 (JP)
(74) Representative: Prüfer & Partner mbB Patentanwälte · Rechtsanwälte
(86) International application number: PCT/JP2023/009798
(87) International publication number: WO 2024/009567

(57) **Abstract**

Provided is a fuel cell system that can reduce an amount of air supplied to a cell stack while maintaining a power generation performance of the cell stack.

The fuel cell system causes a fuel cell to start electric power generation by supplying hydrogen to an anode electrode and air to a cathode electrode. In the fuel cell system, if a temperature of a heating medium is lower than a threshold (S43:NO) while the fuel cell generates electric power, the air at a first supply amount is supplied to the cathode electrode (S41). In the fuel cell system, if the temperature of the heating medium is greater than or equal to than a threshold (S43:YES) while the fuel cell generates electric power, the air supplied to the cathode electrode is gradually reduced to a second supply amount that is less than the first supply amount (S45). In the fuel cell system, in response to the air supply amount to the cathode electrode having reached the second supply amount, the air at the second supply amount is continuously supplied to the cathode electrode (S49).

## Description

### TECHNICAL FIELD

The present invention relates to a fuel cell system.

### BACKGROUND

Patent Literature 1 discloses a fuel cell system. The fuel cell system includes a cell stack, an air pump, a cell stack temperature sensor, and a CPU. The air pump supplies air to the cell stack. The cell stack temperature sensor detects a temperature of the cell stack. The CPU controls output of the air pump based on the temperature of the cell stack detected by the cell stack temperature sensor. The CPU sets air output by the air pump to be greater than output in a case where the temperature of the cell stack is greater than or equal to a predetermined temperature, during at least a part of a period until the temperature of the cell stack reaches the predetermined temperature after the cell stack starts power generation. Thus, in the fuel cell system, a time required for the fuel cell to increase its temperature is shortened.

### Citation List

### Patent Literature

[Patent Literature 1] JP2011-96553A

### SUMMARY

### Technical Problem

In a case where an amount of air supplied to the cell stack is returned from a high supply state, if the supply amount is sharply reduced, there is a problem that voltage of the cell stack suddenly drops, causing power generation to suddenly stop.

An object of the present invention is to provide a fuel cell system that can reduce an amount of air supplied to a cell stack while maintaining power generation performance of the cell stack.

### Solution to Problem

A fuel cell system according to the present invention includes a stack including at least one cell including an anode electrode, a cathode electrode, and a catalyst; a fuel supply unit configured to supply fuel to the anode electrode; an air supply unit configured to supply air to the cathode electrode; a measurement unit configured to measure a temperature of a heating medium used for controlling a temperature of the cell; and a controller configured to control the fuel supply unit and the air supply unit. The controller is configured to execute: a power generation process for causing the stack to generate power by controlling the fuel supply unit to supply the fuel to the anode electrode and controlling the air supply unit to supply the air to the cathode electrode; in response to the temperature of the heating medium measured by the measurement unit being less than a predetermined threshold temperature during power generation by the stack in the power generation process, a first supply process for supplying the air of a first supply amount to the cathode electrode by controlling the air supply unit; and in response to the temperature of the heating medium measured by the measurement unit being greater than or equal to the predetermined threshold temperature during power generation by the stack in the power generation process, a second supply process for adjusting an amount of the air supplied to the cathode electrode by controlling the air supply unit. The second supply process includes: a stepwise supply process for gradually decreasing the amount of the air supplied to the cathode electrode to a second supply amount, the second supply amount being less than the first supply amount in response to the amount of the air supplied to the cathode electrode being equal to the first supply amount; and a continuous supply process for continuously supplying the air at the second supply amount to the cathode electrode in response to the amount of the air supplied to the cathode electrode being equal to the second supply amount.

In the fuel cell system according to the present invention, the amount of the air supplied to the cathode electrode is gradually reduced to the second supply amount. Thus, in the fuel cell system, a sudden drop in the voltage of the stack due to a reduction in the air supply amount, which may cause stopping of power generation, can be prevented.

### BRIEF DESCRIPTION OF THE DRAWINGS

[FIG. 1] FIG. 1 is a diagram illustrating an overview of a fuel cell system.
[FIG. 2] FIG. 2 is a block diagram illustrating an electrical configuration of a controller 6.
[FIG. 3] FIG. 3 is a graph showing changes over time in a stack voltage, a stack current, and an output power.
[FIG. 4] FIG. 4 is a graph showing changes over time in the stack voltage when a threshold Th is set to specific values, respectively.
[FIG. 5] FIG. 5 is a graph showing a relationship between the stack current and a temperature of a heating medium measured by a temperature measurement unit 52.
[FIG. 6] FIG. 6 is a graph showing changes over time in the stack voltage when a threshold Vh1 is set to specific values, respectively.
[FIG. 7] FIG. 7 is a graph showing a relationship between the stack current and the temperature of the heating medium measured by the temperature measurement unit 52.
[FIG. 8] FIG. 8 is a graph showing changes over time in the stack voltage and the output power in a case where an air supply amount is sharply reduced.
[FIG. 9] FIG. 9 is a graph showing changes over time in the stack voltage and the output power in a case where the air supply amount is gradually reduced.
[FIG. 10] FIG. 10 is a graph showing changes over time in the stack voltage before and after implementation of measures.
[FIG. 11] FIG. 11 is a flow chart of a main process.
[FIG. 12] FIG. 12 is a flowchart of a power generation process.
[FIG. 13] FIG. 13 is a flowchart of an output control process.

### DETAILED DESCRIPTION

An embodiment of a fuel cell system 1 according to the present invention will be described with reference to the drawings. The drawings to be referred to are used for describing technical features that can be adopted by the present invention, and the configurations and the like of the devices described herein are not intended to be limited thereto, but are merely examples for description.

### <Overview of Fuel Cell System 1>

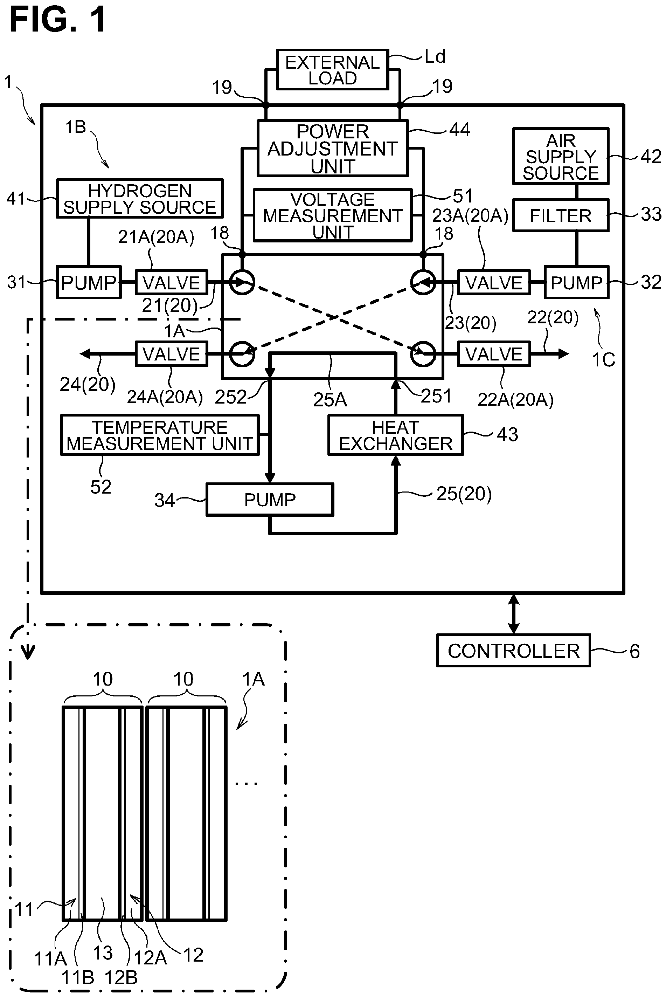

Referring to FIG. 1, a description will be provided on an overview of a fuel cell system 1. The fuel cell system 1 includes a fuel cell 1A, a plurality of channels 20, a plurality of valves 20A, a pump 31, a pump 32, a pump 34, a filter 33, a hydrogen supply source 41, an air supply source 42, a heat exchanger 43, a power adjustment unit 44, a voltage measurement unit 51, a temperature measurement unit 52, and a controller 6. The plurality of channels 20 include a hydrogen supply channel 21, a hydrogen discharge channel 22, an air supply channel 23, an air discharge channel 24, and a heating medium circulation channel 25. The plurality of valves 20A include a hydrogen supply valve 21A, a hydrogen discharge valve 22A, an air supply valve 23A, and an air discharge valve 24A.

The fuel cell 1A has a stacked structure in which a plurality of cells 10 are stacked. The adjacent cells 10 are separated from each other by a separator (not illustrated). The cells 10 are connected in series with each other. Each cell 10 includes an anode 11, a cathode 12, and an electrolyte (e.g., a solid polymer electrolyte membrane) 13.

The electrolyte 13 is disposed between the anode 11 and the cathode 12. The anode 11 includes an anode electrode 11A and an anode catalyst 11B. The cathode 12 includes a cathode electrode 12A and a cathode catalyst 12B. The anode electrode 11A and the cathode electrode 12A are electrodes. The anode catalyst 11B and the cathode catalyst 12B are made of, for example, platinum supported on acetylene black. The materials for the anode catalyst 11B and the cathode catalyst 12B are not limited to the material disclosed as the example, and other materials may be used for the anode catalyst 11B and the cathode catalyst 12B. The separators have a plate shape and are disposed between the cells 10, respectively. Each separator has a fuel channel on one side and an oxidant channel on the other side. The fuel channel faces the anode electrode 11A of a corresponding cell 10. The oxidant channel faces the cathode electrode 12A of the corresponding cell 10. In the present embodiment, hydrogen is used as the fuel, and air is used as the oxidant.

The hydrogen supply source 41 is a hydrogen inlet and functions as a supply source of hydrogen to be consumed in the fuel cell 1A. For example, the hydrogen supply source 41 is connected to a hydrogen tank (not illustrated) to admit hydrogen from the hydrogen tank. The hydrogen supply source 41 may be connected to a water electrolysis device instead of the hydrogen tank. The air supply source 42 is an air inlet and functions as a supply source of air to be consumed in the fuel cell 1A. For example, the air supply source 42 admits air in the atmosphere. The air supply source 42 may be connected to an air tank or a water electrolysis device instead.

The hydrogen supply channel 21 and the hydrogen discharge channel 22 are pipes that allow hydrogen to flow therethrough. The hydrogen supply channel 21 allows hydrogen to be supplied from the hydrogen supply source 41 to the anode electrode 11A of each cell 10. The hydrogen discharge channel 22 allows hydrogen to be discharged from the anode electrode 11A of each cell 10. The air supply channel 23 and the air discharge channel 24 are pipes that allow air to flow therethrough. The air supply channel 23 allows air to be supplied from the air supply source 42 to the cathode electrode 12A of each cell 10. The air discharge channel 24 allows air to be discharged from the cathode electrode 12A of each cell 10.

The pump 31 is disposed at the hydrogen supply channel 21. The pump 31 causes hydrogen to flow from the hydrogen supply source 41 toward the anode electrode 11A of each cell 10 in the hydrogen supply channel 21. The pump 32 is disposed at the air supply channel 23. The pump 32 causes air to flow from the air supply source 42 toward the cathode electrode 12A of each cell 10 in the air supply channel 23. The filter 33 is disposed at a particular position between the air supply source 42 and the pump 32 in the air supply channel 23. The filter 33 removes impurities from the air flowing through the air supply channel 23.

The hydrogen supply valve 21A is disposed at the hydrogen supply channel 21. The hydrogen supply valve 21A is a control valve that can open and close the hydrogen supply channel 21. The hydrogen discharge valve 22A is disposed at the hydrogen discharge channel 22. The hydrogen discharge valve 22A is a control valve that can open and close the hydrogen discharge channel 22. The air supply valve 23A is disposed at the air supply channel 23. The air supply valve 23A is a control valve that can open and close the air supply channel 23. The air discharge valve 24A is disposed at the air discharge channel 24. The air discharge value 24A is a control value that can open and close the air discharge channel 24.

The hydrogen supply valve 21A can regulate a flow rate of hydrogen flowing through the hydrogen supply channel 21. The air supply valve 23A can regulate a flow rate of air flowing through the air supply channel 23. The hydrogen supply valve 21A and the air supply valve 23A can each regulate their respective flow rates stepwise according to electric signals output from the controller 6.

The hydrogen supply source 41, the pump 31, the hydrogen supply valve 21A, and the hydrogen supply channel 21 function as a fuel supply unit 1B that supplies hydrogen to the anode electrode 11A of the fuel cell 1A. The fuel supply unit 1B supplies hydrogen to the anode electrode 11A through the hydrogen supply channel 21 by driving the pump 31 and opening the hydrogen supply valve 21A. The fuel supply unit 1B can regulate an amount of hydrogen supplied to the anode electrode 11A stepwise by a predetermined step amount r by controlling the flow rate of hydrogen flowing through the hydrogen supply channel 21 by the hydrogen supply value 21A. The fuel supply unit 1B stops supplying hydrogen to the anode electrode 11A by stopping the pump 31 and closing the hydrogen supply valve 21A.

The air supply source 42, the filter 33, the pump 32, the air supply valve 23A, and the air supply channel 23 function as an air supply unit 1C that supplies air to the cathode electrode 12A of the fuel cell 1A. The air supply unit 1C supplies air to the cathode electrode 12A via the air supply channel 23 by driving the pump 32 and opening the air supply value 23A. The air supply unit 1C can regulate an amount of air supplied to the cathode electrode 12A stepwise by a predetermined step amount q by controlling the flow rate of air flowing through the air supply channel 23 by the air supply value 23A. The air supply unit 1C stops supplying air to the cathode electrode 12A by stopping the pump 32 and closing the air supply valve 23A.

In response to power generation by the fuel cell 1A, a voltage is applied between output terminals 18 of the fuel cell 1A. The voltage is equal to a sum of voltages, each of which is a voltage between the anode electrode 11A and the cathode electrode 12A of each cell 10. Hereinafter, such a voltage is referred to as a "stack voltage". The current outputted from the output terminals 18 of the fuel cell 1A is referred to as a "stack current".

The fuel cell system 1 has connection terminals 19 to which an external load Ld can be connected. The output terminals 18 of the fuel cell 1A are connected to the connection terminals 19 via the power adjustment unit 44. The power adjustment unit 44 is a converter that steps up or down the stack voltage between the output terminals 18. The power adjustment unit 44 controls the voltage and the current output from the connection terminals 19 to adjust the power that can be supplied to the external load Ld connected to the connection terminals 19. Hereinafter, this power is referred to as "output power".

The voltage measurement unit 51 includes a voltage dividing resistor and an AD converter. The voltage dividing resistor is connected to the output terminals 18 and divides a stack voltage. The AD converter is connected to the voltage dividing resistor. The AD converter outputs am electric signal indicating a voltage between ends of the voltage dividing resistor to the controller 6.

The heating medium circulation channel 25 is a pipe through which the heating medium circulates. The heating medium is a fluid for heating the fuel cell 1A. The heating medium circulation channel 25 has an annular shape. A portion of the heating medium circulation channel 25 is located within the fuel cell 1A. Hereinafter, the portion of the heating medium circulation channel 25 located within the fuel cell 1A is referred to as a "heating portion 25A". The heating medium flowing through the heating portion 25A heats the cells 10 by supplying heat to the cells 10 of the fuel cell 1A. Further, the heating medium is cooled by supplying heat to the cells 10 in the heating portion 25A.

A pump 34 and the heat exchanger 43 are interposed in the heating medium circulation channel 25. The pump 34 sends the heating medium discharged from an outlet 252 of the heating portion 25A toward the heat exchanger 43. The heat exchanger 43 heats the heating medium by supplying heat to the heating medium sent out by the pump 34. The heating medium heated by the heat exchanger 43 is sent toward an inlet 251 of the heating portion 25A.

The temperature measurement unit 52 is connected to the heating medium circulation channel 25 at a position between the outlet 252 of the heating portion 25A and the pump 34. The temperature measurement unit 52 is a thermocouple. The temperature measurement unit 52 measures a temperature of the heating medium discharged from the outlet 252 of the heating portion 25A, and outputs an electric signal indicating the measurement result to the controller 6.

The controller 6 is a control board included in the fuel cell system 1, and controls the entire fuel cell system 1.

### <Principle of Power Generation by Fuel Cell 1A>

In each cell 10, the anode electrode 11A of the anode 11 is supplied with hydrogen from the hydrogen supply source 41 through the hydrogen supply channel 21. Hydrogen is decomposed into hydrogen ions and electrons by the anode catalyst 11B of the anode 11. The hydrogen ions flow through the electrolyte 13 toward the cathode 12. The electrons flow toward the cathode electrode 12A of the cathode 12 through the output terminals 18, the connection terminals 19, and the external load Ld. Thus, the external load Ld is supplied with electric power.

The cathode electrode 12A of the cathode 12 is supplied with air from the air supply source 42 through the air supply channel 23. The hydrogen ions that have flowed from the anode 11 via the electrolyte 13, the electrons that have flowed from the anode 11 via the output terminals 18, the connection terminals 19, and the external load Ld, and oxygen molecules in the air are combined at the cathode catalyst 12B of the cathode 12, thereby generating water.

### <Electrical Configuration of Controller 6>

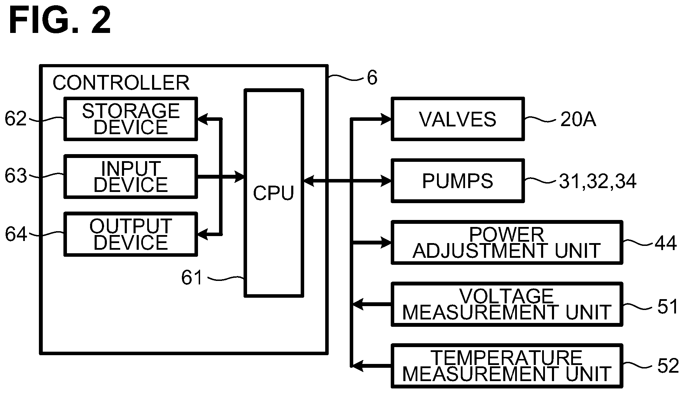

Referring to FIG. 2, a description will be provided on an electrical configuration of the controller 6. The controller 6 includes a CPU 61, a storage device 62, an input device 63, and an output device 64. The CPU 61 is electrically connected to the storage device 62, the input device 63, the output device 64, the plurality of valves 20A, the pump 31, the pump 32, the pump 34, the power adjustment unit 44, the voltage measurement unit 51, and the temperature measurement unit 52.

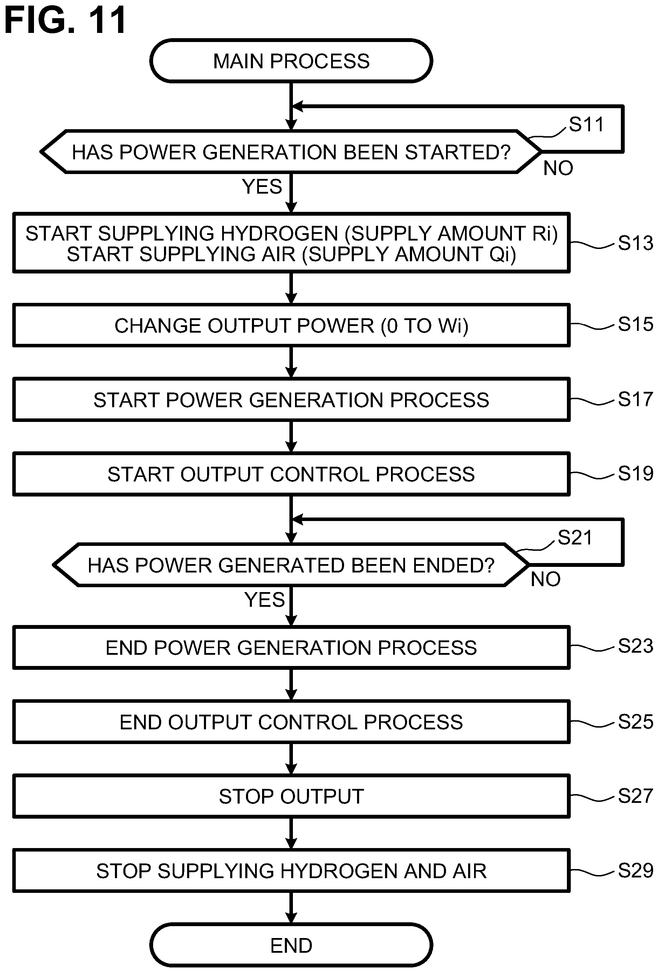

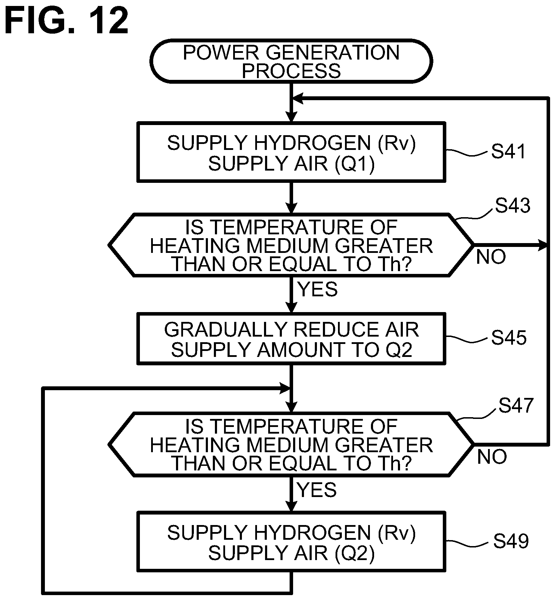

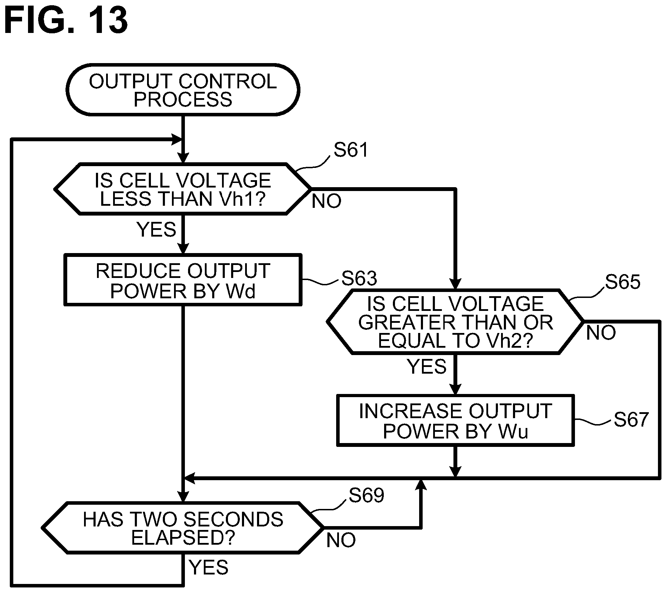

The CPU 61 controls the fuel cell system 1 including the controller 6. The storage device 62 stores programs for the CPU 61 to execute a main process (refer to FIG. 11), a power generation process (refer to FIG. 12), and an output control process (refer to FIG. 13), which will be described later.

The input device 63 is a push button, and receives an input operation to the fuel cell system 1. The output device 64 is a display, and outputs the state of the fuel cell system 1 and other information.

The CPU 61 controls the pump 31 to cause hydrogen to flow from the hydrogen supply source 41 toward the anode electrode 11A of each cell 10 through the hydrogen supply channel 21. The CPU 61 controls the pump 32 to cause air to flow from the air supply source 42 toward the cathode electrode 12A of each cell 10 through the air supply channel 23. The CPU 61 controls the pump 34 to cause the heating medium to circulate through the heating medium circulation channel 25. Thus, the heating medium heated by the heat exchanger 43 is sent toward the heating portion 25A of the heating medium circulation channel 25. The CPU 61 controls the plurality of valves 20A to open and close the plurality of channels 20.

The CPU 61 can adjust an output power of the fuel cell system 1 by outputting an electric signal to and controlling the power adjustment unit 44.

The CPU 61 can obtain a stack voltage of the fuel cell 1A based on the electric signal output from the voltage measurement unit 51. The CPU 61 can obtain a temperature of the heating medium discharged from the outlet 252 of the heating portion 25A of the heating medium circulation channel 25 based on a signal output from the temperature measurement unit 52.

### <Performance Degradation Due to Flooding>

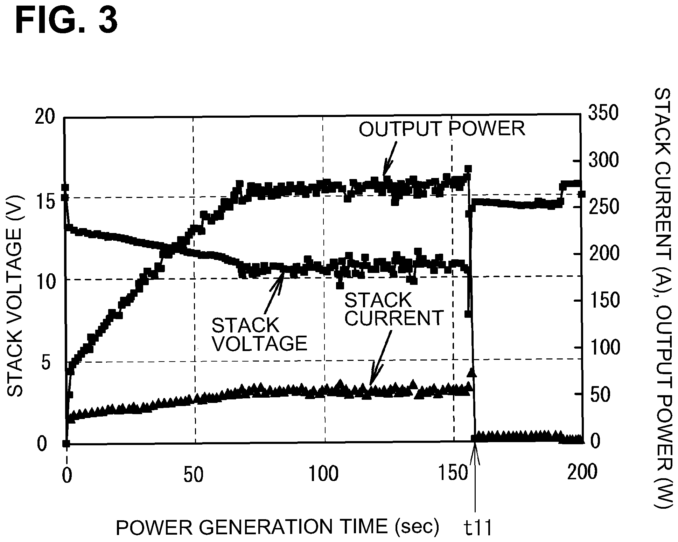

Flooding refers to a phenomenon in which moisture generated in the process of power generation in the fuel cell 1A accumulates on a cathode electrode 12A. If flooding occurs, moisture accumulating on the cathode electrode 12A blocks the air pathways, resulting in a degradation in power generation performance by the fuel cell 1A. FIG. 3 is a graph showing changes over time in the stack voltage, the stack current of the fuel cell 1A, and the output power of the fuel cell system 1. The stack voltage and the stack current both sharply drop after the elapse of time t11 from the start of power generation, indicating that flooding has occurred at this timing.

In the present embodiment, the fuel cell system 1 takes the following measures to reduce the occurrence of flooding: (1) heating the fuel cell 1A; (2) controlling the output power; (3) adjusting an amount of air supplied at the start of power generation; and (4) adjusting the amount of air supplied after the temperature of the heating medium rises.

### (1) Measure through Heating of Fuel Cell 1A

Flooding is more likely to occur as the temperature of the fuel cell 1A during power generation is lower. This is because the lower the temperature, the more easily the moisture condenses and accumulates on a cathode electrode 12A. Therefore, in response to the temperature of the heating medium measured by the temperature measurement unit 52 falling below a predetermined threshold Tk, the CPU 61 drives the pump 34 disposed in the heating medium circulation channel 25 to supply the heating medium to the heating portion 25A to heat the cells 10.

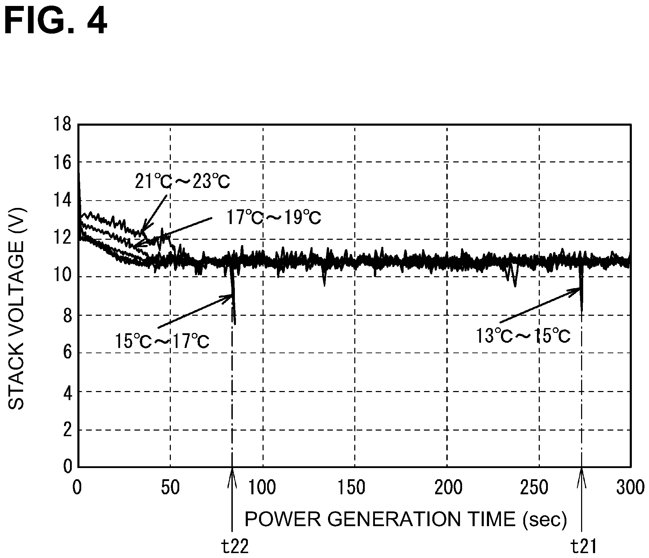

FIG. 4 is a graph showing changes over time in the stack voltage when the threshold Tk is set from 13°C to 15°C, from 15°C to 17°C, from 17°C to 19°C, and from 21°C to 23°C, respectively. When the threshold Tk was set to from 13°C to 15°C, the stack voltage sharply dropped after the elapse of time t21 from the start of power generation. When the threshold Tk was set to from 15°C to 17°C, the stack voltage sharply dropped after the elapse of time t22 from the start of power generation. Both of these indicate that flooding has occurred at the respective timings. On the other hand, when the threshold Tk was set to from 17°C to 19°C and from 21°C to 23°C, respectively, a rapid drop in the stack voltage due to the occurrence of flooding was not observed. Therefore, in the present embodiment, the threshold Tk is set to 17°C. Further, the CPU 61 performs control to heat the fuel cell 1A based on the set threshold Tk.

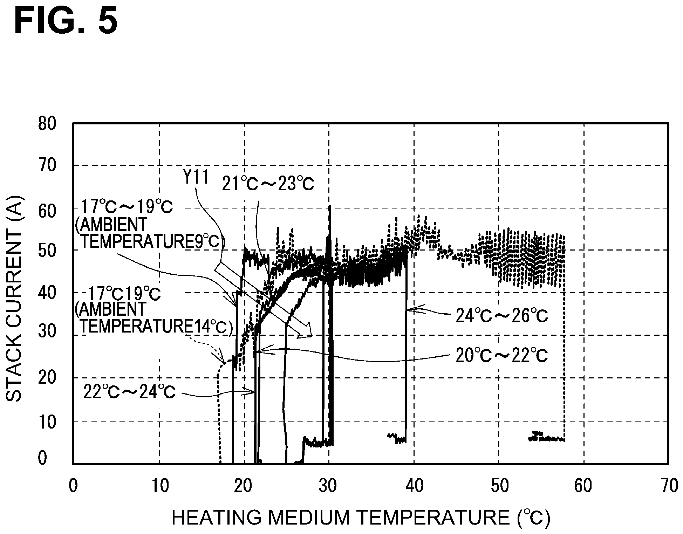

FIG. 5 is a graph showing a relationship between the stack current and the temperature of the heating medium measured by the temperature measurement unit 52 for each case when the threshold Tk is set from 17°C to 19°C (ambient temperature 9°C/14°C), from 20°C to 22°C, from 21°C to 23°C, from 22°C to 24°C, and from 24°C to 26°C, respectively. The temperature of the heating medium increases as the elapsed time from the start of power generation of the fuel cell 1A becomes longer. Therefore, the horizontal axis (heating medium temperature) of the graph can be regarded as synonymous with the elapsed time from the start of power generation of the fuel cell 1A.

From these results, it was found that the greater the threshold Tk is set, the more the timing of the stack current starting to flow is delayed, and a rapid rise in the stack current can be prevented (an arrow Y11). This means that setting a greater threshold Tk can more effectively prevent a large stack current from flowing due to the fuel cell 1A generating power at a low temperature. Therefore, it was found that setting a greater threshold Tk allows the fuel cell 1A to generate power in an environment where flooding is less likely to occur.

### (2) Measure through Controlling of Output Power

Examples of a method of reducing the occurrence of flooding include a method of controlling power output from the fuel cell system 1. In response to the voltage of each cell 10 of the fuel cell 1A falling below a predetermined threshold Vh1, the CPU 61 controls the power adjustment unit 44 to reduce the output power. On the other hand, in response to the voltage of each cell 10 of the fuel cell 1A reaching or exceeding a predetermined threshold Vh2 that is greater than the threshold Vh1, the CPU 61 controls the power adjustment unit 44 to increase the output power. Thus, the CPU 61 controls the voltage of each cell 10 to ensure that the voltage does not fall below the threshold Vh1, thereby reducing the occurrence of flooding.

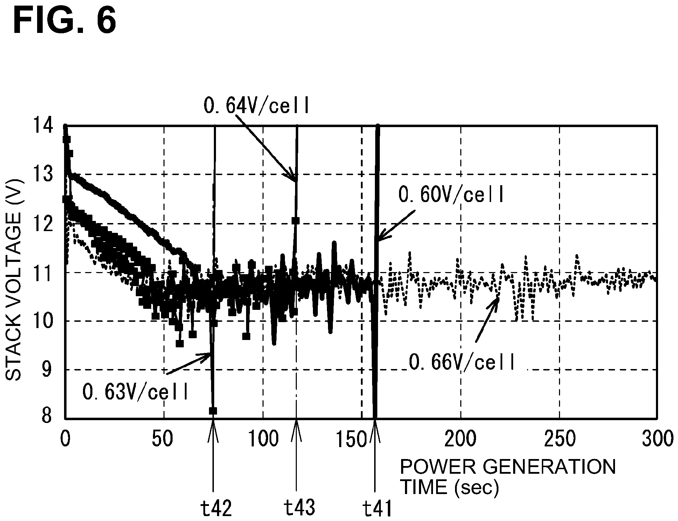

FIG. 6 is a graph showing changes over time in the stack voltage when the threshold Vh1 is set to 0.60V, 0.63V, 0.64V, and 0.66V per cell, respectively. When the threshold Vh1 was set to 0.60V per cell, the stack voltage sharply dropped after the elapse of time t41 from the start of power generation. When the threshold Vh1 was set to 0.63V per cell, the stack voltage sharply dropped after the elapse of time t42 from the start of power generation. When the threshold Vh1 was set to 0.64V per cell, the stack voltage sharply dropped after the elapse of time t43 from the start of power generation. In FIG. 6, a rapid drop in the stack voltage is not shown due to the issue of the sampling period. These all indicate that flooding has occurred at the respective timings. On the other hand, when the threshold Vh1 was set to 0.66V per cell, a rapid drop in the stack voltage due to the occurrence of flooding was not observed. Therefore, in the present embodiment, the threshold Vh1 is set to 0.66 V per cell and the threshold Vh2 is set to 0.68 V per cell, which is greater than the threshold Vh1. Further, the CPU 61 controls the output power based on the set thresholds Vh1 and Vh2.

If the degree of increasing the output power when the voltage of each cell 10 is reaches or exceeds the threshold Vh2, flooding is more likely to occur due to the rapid increase in stack current. Hereinafter, the degree of increasing the output power is referred to as an "increase amount Wu".

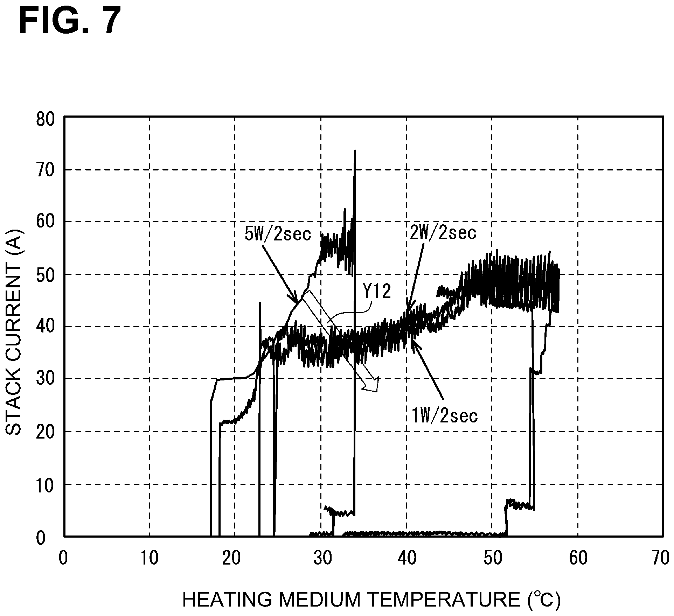

FIG. 7 is a graph showing a relationship between the stack current and the temperature of the heating medium measured by the temperature measurement unit 52 for each case where the increase amount Wu of the output power is set to 1 W/2 sec, 2 W/2 sec, and 5 W/2 sec, respectively. As in the case of FIG. 5, the horizontal axis (heating medium temperature) of the graph can be regarded as synonymous with the elapsed time from the start of power generation of the fuel cell 1A.

From these results, it was found that the lower the increase amount Wu is set, the more the timing of the stack current starting to flow is delayed, and a rapid increase in the stack current can be prevented (an arrow Y12). This means that setting a lower increase amount Wu can effectively prevent a large stack current from flowing due to the fuel cell 1A generating power at a low temperature. Therefore, it was found that setting a lower increase amount Wu allows the fuel cell 1A to generate power in an environment where flooding is less likely to occur. In the present embodiment, the increase amount Wu is set to 1 W.

### (3) Measure through Adjustment of Air Supply Amount at Start of Power Generation

For starting power generation of the fuel cell 1A, in the fuel cell system 1, a large amount of air is supplied to the cathode electrode 12A of each cell 10 by the air supply unit 1C to blow off moisture accumulating on the cathode electrodes 12A, thereby removing moisture from the cathode electrodes 12A. More specifically, the CPU 61 sets the air supply amount to twice the supply amount of air required for normal power generation from immediately before the start of power generation of the fuel cell 1A until the temperature of the heating medium measured by the temperature measurement unit 52 reaches or exceeds the predetermined threshold Th. Hereinafter, the air supply amount required for normal power generation is referred to as a "second supply amount Q2", and a supply amount twice the second supply amount is referred to as a "first supply amount Q1". In the present embodiment, the threshold Th is set to 37.5°C.

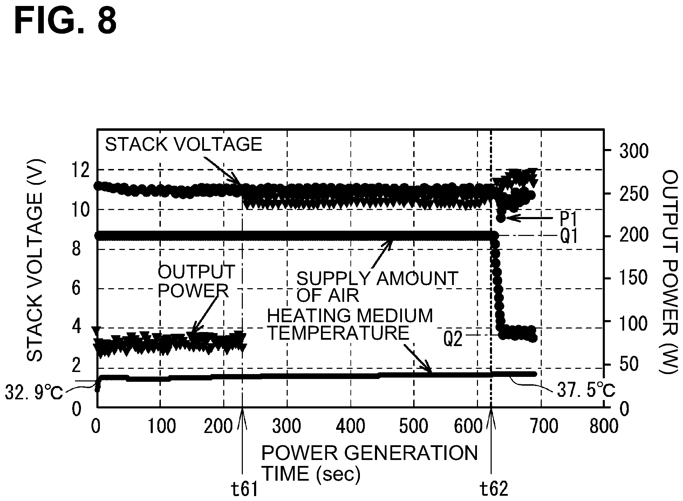

FIG. 8 is a graph showing changes over time in the stack voltage and the output power when the air supply amount is adjusted as described above. After the elapse of time t61 from the start of power generation, a state is switched to a state in which power can be supplied from the connection terminals 19 by the power adjustment unit 44. During the period from the start of power generation to the elapse of time t62 after the elapse of time t61, the stack voltage and the output power are stable in a state where air at the first supply amount Q1 is being supplied, and the occurrence of flooding is prevented.

### (4) Measure through Adjustment of Air Supply Amount After Temperature Rise of Heating Medium

As shown in FIG. 8, the temperature of the heating medium measured by the temperature measurement unit 52 gradually rises from 32.9°C until time t62 elapses from the start of power generation. Then, when time t62 elapses, the temperature of the heating medium measured by the temperature measurement unit 52 reaches the threshold Th. At this time, the CPU 61 control the air supply amount such that the amount of the air supplied to the cathode electrode 12A of each cell 10 by the air supply unit 1C is sharply reduced from the first supply amount Q1 to the second supply amount Q2. In this case, the stack voltage temporarily drops to 9.55 V (refer to sample P1) due to the sudden decrease in the air supply amount. Temporarily dropping of the stack voltage to 9.55 V causes the output power from the fuel cell system 1 to become unstable, which is not preferable.

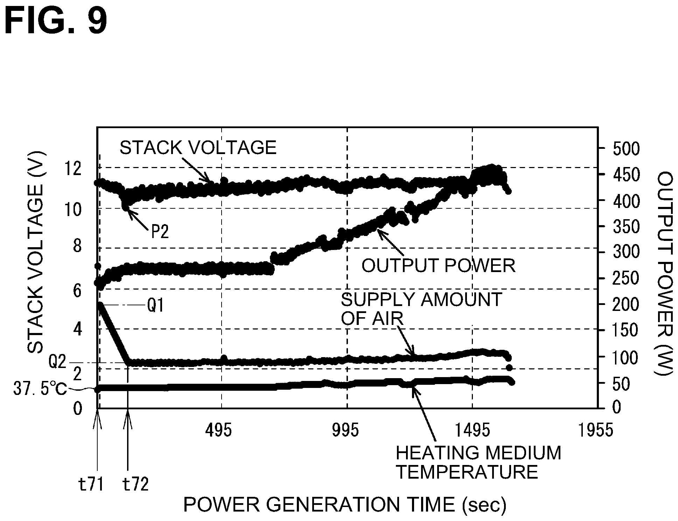

Therefore, the CPU 61 gradually reduces the air supply amount from the first supply amount Q1 to the second supply amount Q2. As shown in FIG. 9, when time t71 elapses from the start of power generation, the temperature of the heating medium measured by the temperature measurement unit 52 reaches the threshold Th. The amount of the air supplied to the cathode electrode 12A of each cell 10 is gradually reduced from the first supply amount Q1 to the second supply amount Q2 during the period from the start of power generation to the elapse of time t72.

In this case, the stack voltage temporarily drops to 10.2 V (refer to sample P2) due to the sudden decrease in the air supply amount. This value of 10.2 V is larger than the stack voltage in the case of FIG. 8 (9.55 V of the sample P1). Therefore, it was found that gradually reducing the air supply amount can stabilize the output power of the fuel cell system 1 as compared with the case of FIG. 8.

### Effects Achieved by Measures (1) to (4)

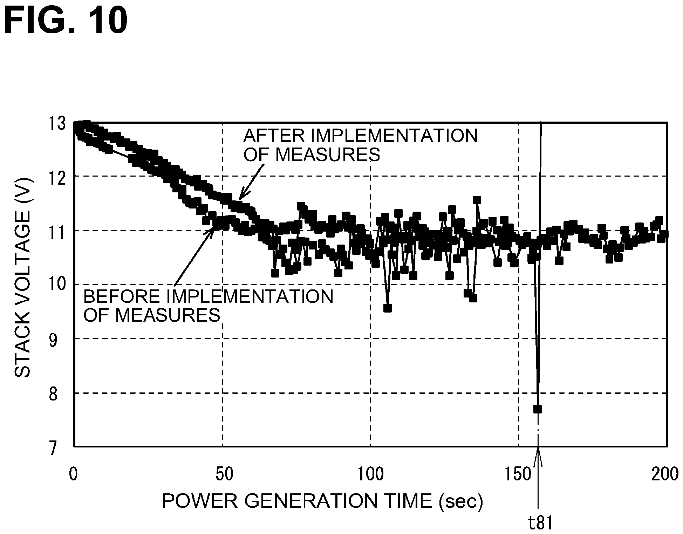

FIG. 10 is a graph showing changes over time in the stack voltage before and after the implementation of measures (1) to (4). In the case before implementation of the measures, the stack voltage sharply drops after the elapse of time t81 from the start of power generation, indicating that flooding has occurred at this timing. On the other hand, in the case after implementation of the measures, a rapid drop in the stack voltage was not observed, and the stack voltage stably changed. Therefore, it was found that implementing the the measures (1) to (4) can reduce the occurrence of flooding.

### <Main Process>

Referring to FIGS. 11 to 13, a description will be provided on the main process. In response to an operation of turning on the power of the controller 6, the CPU 61 starts the main process by reading and executing the program stored in the storage device 62. At the start of the main process, the supply of hydrogen to the anode electrodes 11A is stopped, and the supply of air to the cathode electrodes 12A is also stopped. The power adjustment unit 44 sets the output power of the fuel cell system 1 to 0 W. The external load Ld is connected to the connection terminals 19 of the fuel cell system 1.

As illustrated in FIG. 11, the CPU 61 determines whether an input operation for starting power generation of the fuel cell 1A has been detected via the input device 63 (S11). In a case where the input operation has not been detected (S11:NO), the CPU 61 returns the process to S11, and continuously waits for the input operation. In a case where the input operation for starting power generation of the fuel cell 1A has been detected via the input device 63 (S11:YES), the CPU 61 moves the process to S13.

The CPU 61 controls the pump 31 and the hydrogen supply valve 21A of the fuel supply unit 1B to start supplying hydrogen to the anode electrodes 11A. The CPU 61 controls the hydrogen supply valve 21A so that the hydrogen supply amount is equal to an initial supply amount Ri. The initial supply amount Ri refers to an amount of hydrogen required to start power generation of the fuel cell 1A in accordance with S15 described later, and also required to fill the fuel cell 1A with hydrogen. The initial supply amount Ri also refers to an amount capable of blowing off and removing moisture accumulating on the anode electrodes 11A. To be specific, the initial supply amount Ri is 1 Normal Liter per purge (1 NL/purge).

The CPU 61 controls the pump 32 and the air supply value 23A of the air supply unit 1C to start supplying air to the cathode electrodes 12A (S13). The CPU 61 controls the air supply valve 23A so that the air supply amount is equal to an initial supply amount Qi. The initial supply amount Qi refers to an amount of the air required to start power generation of the fuel cell 1A in accordance with S15 described later, and also required to fill the fuel cell 1A with air. The initial supply amount Qi also refers to an amount capable of blowing off and removing moisture accumulating on the cathode electrodes 12A.

By supplying air to the cathode electrodes 12A, moisture accumulating on the cathode electrodes 12A is blown off and removed from the cathode electrodes 12A before the power supply from the fuel cell system 1 to the external load Ld is started. The fuel cell 1A starts power generation in response to the hydrogen supply to the anode electrodes 11A from the fuel supply unit 1B and the air supply to the cathode electrodes 12A from the air supply unit 1C. A stack voltage is applied between the output terminals 18 of the fuel cell 1A.

The CPU 61 controls the power adjustment unit 44 to change the output power of the fuel cell system 1 from 0 W to an initial power Wi (S15). Thus, the power supply to the external load Ld connected to the connection terminals 19 of the fuel cell system 1 is started.

The CPU 61 starts the power generation process (refer to FIG. 12) (S17), and then starts the output control process (S19). The power generation process and the output control process are executed in parallel with the main process.

The CPU 61 determines whether an input operation for ending power generation of the fuel cell 1A has been detected via the input device 63 (S21). In a case where the input operation has not been detected (S21:NO), the CPU 61 returns the process to S21. During this time, the power generation process and the output control process are continued.

Referring to FIG. 12, a description will be provided on the power generation process. The CPU 61 controls the hydrogen supply valve 21A so that the amount of hydrogen supplied to the anode electrodes 11A is equal to a hydrogen supply amount for power generation Rv in a state where the fuel cell 1A generates power (S41). The hydrogen supply amount for power generation Rv refers to a hydrogen supply amount required for normal power generation. The hydrogen supply amount for power generation Rv is greater than or equal to the initial supply amount Ri (Rv ≥ Ri). Further, the CPU 61 controls the air supply valve 23A so that the amount of air supplied to the cathode electrodes 12A is equal to the first supply amount Q1 (S41). The first supply amount Q1 is substantially equal to the initial supply amount Qi.

The CPU 61 receives the temperature of the heating medium measured by the temperature measurement unit 52. The CPU 61 determines whether the received temperature is greater than or equal to the threshold Th (S43). If the CPU 61 determines that the temperature of the heating medium is less than the threshold Th (S43:NO), the CPU 61 returns the process to S41. The CPU 61 continues to control the hydrogen supply valve 21A so that the amount of the hydrogen supplied to the anode electrodes 11A is equal to the hydrogen supply amount for power generation Rv (S41). Further, the CPU 61 controls the air supply valve 23A so that the amount of the air supplied to the cathode electrodes 12A is equal to the first supply amount Q1 (S41).

As the power generation by the fuel cell 1A continues, the temperature of the fuel cell 1A rises, and the temperature of the heating medium also rises. If the CPU 61 determines that the temperature of the heating medium is greater than or equal to the threshold Th (S43:YES), the CPU 61 returns the process to S45. The CPU 61 controls the air supply value 23A to gradually reduce the amount of the air supplied to the cathode electrodes 12A from the first supply amount Q1 to the second supply amount Q2 by a step amount q every second (S45). The second supply amount Q2 is half of the first supply amount Q1. That is, the amount of the air supplied to the cathode electrodes 12A is gradually reduced, thereby eventually becoming half of the first supply amount Q1.

After the amount of the air supplied to the cathode electrodes 12A is reduced to the second supply amount Q2, the CPU 61 receives the temperature of the heating medium measured by the temperature measurement unit 52. The CPU 61 determines whether the received temperature of the heating medium is greater than or equal to the threshold Th (S47). If the CPU 61 determines that the temperature of the heating medium is equal to or greater than the threshold Th (S47:YES), the CPU 61 continues to control the hydrogen supply valve 21A so that the amount of the hydrogen supplied to the anode electrodes 11A is equal to the hydrogen supply amount for power generation Rv (S49). Further, the CPU 61 continues to control the air supply valve 23A so that the amount of the air supplied to the cathode electrodes 12A is equal to the second supply amount Q2 (S49).

If the CPU 61 determines that the temperature of the heating medium is less than the threshold Th (S47:NO) after the amount of air supplied to the cathode electrodes 12A is reduced to the second supply amount Q2, the CPU 61 returns the process to S41. The CPU 61 continues to control the hydrogen supply valve 21A so that the amount of the hydrogen supplied to the anode electrodes 11A is equal to the hydrogen supply amount for power generation Rv (S41). Further, the CPU 61 controls the air supply valve 23A so that the amount of the air supplied to the cathode electrodes 12A is equal to the first supply amount Q1 (S41). Thus, the amount of air supplied to the cathode electrodes 12A increases to twice the second amount Q2.

Referring to FIG. 13, a description will be provided on the output control process. The CPU 61 receives the stack voltage measured by the voltage measurement unit 51. Based on the received stack voltage, the CPU 61 identifies a voltage per each of the plurality of cells 10 (hereinafter, referred to as a "cell voltage). The CPU 61 determines whether the identified cell voltage is less than the threshold Vh1 (S61). If the CPU 61 determines that the cell voltage is less than the threshold Vh1 (S61:YES), the CPU 61 controls the power adjustment unit 44 so that the output power is equal to a value obtained by subtracting a predetermined power (hereinafter, referred to as a "reduction amount Wd") from the current output power (S63). In the present embodiment, the reduction amount Wd is 10 W. The CPU 61 moves the process to S69.

If the CPU 61 determines that the identified cell voltage is greater than or equal to the threshold Vh1 (S61:NO), the CPU 61 determines whether the identified cell voltage is greater than or equal to the threshold Vh2 (S65). If the CPU 61 determines that the identified cell voltage is greater than or equal to the threshold Vh2 (S65:YES), the CPU 61 controls the power adjustment unit 44 so that the output power is equal to a value obtained by adding an increase amount Wu to the current output power (S67). Since the increase amount Wu is set to 1 W in the present embodiment, the increase amount Wu is one-tenth of the reduction amount Wd (10 W). The CPU 61 moves the process to S69.

If the CPU 61 determines that the identified cell voltage is less than the threshold Vh2 (S65:NO), the CPU 61 moves the process to S69 without changing the output current.

The CPU 61 determines whether two seconds have elapsed from completion of the processing of S61 to S67 (S69). If the CPU 61 determines that two seconds have not elapsed from the completion of the processing of S61 to S67 (S69:NO), the CPU61 moves the process back to S69. If the CPU 61 determines that two seconds have elapsed from the completion of the processing of S61 to S67 (S69:YES), the CPU 61 moves the process back to S61.

As illustrated in FIG. 11, if the CPU 61 detects an input operation for ending the power generation by the fuel cell 1A (S21:YES), the CPU 61 ends the power generation process started in S17 (S23), and ends the output control process started in S19 (S25).

The CPU 61 controls the power adjustment unit 44 to change the output power of the fuel cell system 1 to 0 W (S27). Thus, the power supply to the external load Ld connected to the connection terminals 19 of the fuel cell system 1 is stopped. The CPU 61 controls the pump 31 and the hydrogen supply valve 21A of the fuel supply unit 1B to stop supplying hydrogen to the anode electrodes 11A (S29). The CPU 61 controls the pump 32 and the air supply value 23A of the air supply unit 1C to stop supplying air to the cathode electrodes 12A (S29). Thus, the power generation by the fuel cell 1A is stopped. The CPU 61 ends the main process.

### <Effects of Present Embodiment>

In the fuel cell system 1, in a case where the temperature of the heating medium for heating the fuel cell 1A is less than the threshold Th (S43:NO) after the fuel cell 1A starts power generation, the amount of the air supplied to the cathode electrodes 12A is set to the first supply amount Q1 (S41). The first supply amount Q1 is twice the second supply amount Q2. Supplying a large amount of air to the cathode electrodes 12A allows the moisture accumulating on the cathode electrodes 12A to be blown off and removed from the cathode electrodes 12A. Therefore, in the fuel cell system 1, in the case of a low-temperature environment in which flooding is likely to occur, the occurrence of flooding can be reduced by supplying a large amount of air.

On the other hand, in a case where the temperature of the heating medium reaches or exceeds the threshold Th in a state where the amount of the air supplied to the cathode electrodes 12A is equal to the first supply amount Q1 (S43 :YES), the amount of the air supplied to the cathode electrodes 12A is gradually reduced from the first supply amount Q1 to the second supply amount Q2 (S45). The second supply amount Q2 is half of the first supply amount Q1. Thus, in the fuel cell system 1, a sudden drop in the voltage of the fuel cell 1A due to a reduction in the air supply amount, which can cause the stopping of power generation, during the process of changing the air supply amount to the second supply amount Q2 required for normal power generation, can be prevented.

Immediately after the start of the power generation process (refer to FIG. 12), the air at the first supply amount Q1 is supplied to the cathode electrodes 12A in S41. That is, immediately after the start of the power generation by the fuel cell 1A, the air at the first supply amount Q1 is supplied to the cathode electrodes 12A regardless of the temperature of the heating medium. By doing so, in the fuel cell system 1, the moisture accumulating on the cathode electrodes 12A at the start of power generation by the fuel cell 1A can be blown off and removed from the cathode electrodes 12A with air. In the fuel cell system 1, the occurrence of flooding and the resulting reduction in power generation efficiency due to moisture accumulating on the cathode electrodes 12A can be prevented from the start of power generation by the fuel cell 1A.

The air supply value 23A of the air supply unit 1C gradually reduces the amount of the air supplied to the cathode electrodes 12A to the second supply amount Q2 by the step amount q every second. In the fuel cell system 1, by using the air supply valve 23A to change the air supply amount by the step amount q, the control of the air supply amount can be performed accurately with a simple configuration. Further, in the fuel cell system 1, by gradually reducing the supply amount of air every second, the time change of the supply amount of air to the cathode electrodes 12A can be maintained constant. Thus, in the fuel cell system 1, a sudden drop in the voltage of the fuel cell 1A due to a reduction in the supply amount of air, which can cause the stopping of power generation, can be prevented.

In the fuel cells system 1, in a case where the stack voltage is less than the threshold Vh1 (S61:YES), the output power is reduced by the reduction amount Wd (S63). Thus, in the fuel cell system 1, the occurrence of flooding can be prevented when a large amount of power is supplied to the external load Ld while the stack voltage of the fuel cell 1A is low. In the fuel cells system 1, in a case where the stack voltage is greater than the threshold Vh2, the output power is increased by the increase amount Wu (S67). Thus, in the fuel cell system 1, power can be supplied to the external load Ld by efficiently using the power generation capacity of the fuel cell 1A.

In the fuel cell system 1, the necessity of increasing or reducing the output power is determined based on two thresholds (thresholds Vh1 and Vh2). This can stabilize the output power when the stack voltage is greater than or equal to the threshold Vh1 and less than the threshold Vh2. Further, in the fuel cell system 1, the increase amount Wu is less than the reduction amount Wd. This can prevent the occurrence of flooding due to a sudden increase in the output power. In addition, in the fuel cell system 1, the reduction amount Wd is set to be ten times the increase amount Wu. This allows the output power to rapidly reduce in a case where the stack voltage is less than the threshold Vh1. Therefore, in the fuel cell system 1, conditions where flooding is likely to occur can be promptly resolved.

### <Modifications>

The present invention is not limited to the above-described embodiment, and various modifications are possible. The fuel cell 1A may generate power by being supplied with substances other than hydrogen by the fuel supply unit 1B. For example, the fuel supply unit 1B may supply methanol to the fuel cell 1A for power generation. The temperature measurement unit 52 may measure the temperature of the heating medium flowing through the heating portion 25A.

The fuel cell system 1 may further include a circulation channel that connects the hydrogen supply channel 21 and the hydrogen discharge channel 22. The circulation channel may allow a part of hydrogen discharged through the hydrogen discharge channel 22 to flow toward the hydrogen supply channel 21 to circulate hydrogen. In a case where the original pressure of hydrogen supplied from the hydrogen supply source 41 is sufficiently high, the pump 31 might not necessarily be provided.

In the fuel cell system 1, contaminants (such as dust and dirt) attached to the cathode electrodes 12A, excluding those chemically bonded to the cathode electrodes 12A (such as organic gases, NOx, and SOx), may be removed by the supply of air by the air supply unit 1C.

The specific examples of the thresholds Tk, Th, Vh1, and Vh2 in the above embodiment are merely examples, and other values may be set as appropriate.

In the fuel cell system 1, in a case where power generation by the fuel cell 1A is started by the start of the supply of air to the cathode electrodes 12A (S13), the amount of air to be supplied may be controlled to the first supply amount Q1.

In the fuel cell system 1, in a case where the temperature of the heating medium is greater than or equal to the threshold Th immediately after the power generation by the fuel cell 1A starts, the amount of the air supplied by the air supply unit 1C may be gradually reduced from the initial supply amount Qi to the second supply amount Q2. That is, in the fuel cell system 1, immediately after the power generation by the fuel cell 1A starts, the amount of air supplied by the air supply unit 1C might not necessarily be set to the first supply amount Q1 at all times.

In the fuel cell system 1, in S45, the amount of air supplied to the cathode electrodes 12A may be gradually reduced to the second supply amount Q2 by a predetermined ratio of the first supply amount Q1. For example, 0.4% may be set as the ratio. In this case, the calculation result of Q1 × 0.004 may be calculated as an increment U. In the fuel cell system 1, in S45, the amount of air supplied by the air supply source Ac may be gradually reduced from the first supply amount Q1 in increments U. In the fuel cell system 1, the amount of air supplied to the cathode electrodes 12A can be gradually reduced at a constant rate. Thus, a sudden drop in the voltage of the stack due to a reduction in the supply amount of air, which can cause the stopping of power generation, can be prevented.

In the fuel cell system 1, in S45, the step amount q for gradually reducing the amount of air supplied to the cathode electrodes 12A from the first supply amount Q1 to the second supply amount Q2 may be variable. That is, in the fuel cell system 1, the supply amount of air may be gradually reduced by different step amounts. In the fuel cell system 1, the cycle at which the supply amount of air is gradually reduced by the step amount q may be set to a value other than one second. For example, the cycle may be 2 seconds. In the fuel cell system 1, the amount of air supplied to the cathode electrodes 12A may be linearly changed from the first supply amount Q1 to the second supply amount Q2. That is, the amount of air supplied to the cathode electrodes 12A might not necessarily be changed gradually.

In the fuel cell system 1, only the supply of air to the cathode electrodes 12A may be performed without supplying hydrogen to the anode electrodes 11A before power generation by the fuel cell 1A starts in S13. That is, in the fuel cell system 1, before the fuel cell 1A starts power generation, air may be supplied to the cathode electrodes 12A by the air supply unit 1C to remove moisture accumulating on the cathode electrodes 12A. Thus, in the fuel cell system 1, moisture accumulating on the cathode electrodes 12A can be removed before the fuel cell 1A starts power generation. In the fuel cell system 1, the reduction in power generation efficiency due to the occurrence of flooding caused by moisture accumulating on the cathode electrodes 12A can be prevented before the fuel cell 1A starts power generation.

A relationship between the first supply amount Q1 and the second supply amount Q2 is not limited to the above embodiment. The first supply amount Q1 may be changed as appropriate within a range satisfying the condition that the first supply amount Q1 is greater than the second supply amount Q2. For example, the first supply amount Q1 may be 1.5 times, 3 times, or other the second supply amount Q2.

In the fuel cell system 1, in the power control process, in a case where the cell voltage is greater than or equal to the threshold Vh1 (S61:NO), a process of increasing the output power may be executed regardless of the magnitude relationship between the cell voltage and the threshold Vh2. The respective values of the reduction amount Wd and the increase amount Wu of the output voltage are not limited to those in the above embodiment. Each value may be appropriately changed within a range satisfying the condition that the reduction amount Wd is greater than the increase amount Wu. In one example, the reduction amount Wd may be greater than 10 times the increase amount Wu. In another example, the reduction amount Wd may be set to 10 W, and the increase amount Wu may be set to 5 W. The reduction amount Wd may be less than the increase amount Wu. The fuel cell system 1 might not necessarily execute the output control process.

### <Others>

The CPU 61 that executes S17 is an example of a "power generation process" in the present invention. The CPU 61 that executes S41 is an example of a "first supply process" or a "startup supply process" in the present invention. The CPU 61 that executes S45 and S49 is an example of a "second supply process" in the present invention. The CPU 61 that executes S45 is an example of a "stepwise supply process" in the present invention. The CPU 61 that executes S49 is an example of a "continuous supply process" in the present invention. The CPU 61 that executes S13 is an example of a "pre-power generation supply process" in the present invention. The CPU 61 that executes S63 is an example of a "power reduction process" in the present invention. The CPU 61 that executes S67 is an example of a "power increasing process" in the present invention. The threshold Th is an example of a "threshold temperature" in the present invention. The threshold Vh1 is an example of a "first threshold" in the present invention. The threshold Vh2 is an example of a "second threshold" in the present invention.

### Reference Signs List

1: fuel cell system
1A: fuel cell
1B: fuel supply unit
1C: air supply source
5: temperature measurement unit
6: controller
10: cell
11A: anode electrode
12A: cathode electrode
52: temperature measurement unit

## Claims

1. A fuel cell system comprising:
a stack including at least one cell including an anode electrode, a cathode electrode, and a catalyst;
a fuel supply unit configured to supply fuel to the anode electrode;
an air supply unit configured to supply air to the cathode electrode;
a measurement unit configured to measure a temperature of a heating medium used for controlling a temperature of the cell; and
a controller configured to control the fuel supply unit and the air supply unit,
wherein the controller is configured to execute:
a power generation process for causing the stack to generate power by controlling the fuel supply unit to supply the fuel to the anode electrode and controlling the air supply unit to supply the air to the cathode electrode;
in response to the temperature of the heating medium measured by the measurement unit being less than a predetermined threshold temperature during power generation by the stack in the power generation process, a first supply process for supplying the air of a first supply amount to the cathode electrode by controlling the air supply unit; and
in response to the temperature of the heating medium measured by the measurement unit being greater than or equal to the predetermined threshold temperature during power generation by the stack in the power generation process, a second supply process for adjusting an amount of the air supplied to the cathode electrode by controlling the air supply unit, the second supply process including:
a stepwise supply process for gradually decreasing the amount of the air supplied to the cathode electrode to a second supply amount, the second supply amount being less than the first supply amount in response to the amount of the air supplied to the cathode electrode being equal to the first supply amount; and
a continuous supply process for continuously supplying the air at the second supply amount to the cathode electrode in response to the amount of the air supplied to the cathode electrode being equal to the second supply amount.

2. The fuel cell system according to claim 1,
wherein the controller is further configured to execute a startup supply process for supplying the air at the first supply amount to the cathode electrode at a start of power generation by the stack in the power generation process, regardless of the temperature of the heating medium measured by the measurement unit.

3. The fuel cell system according to claim 1,
wherein the air supply unit is configured to control the amount of the air supplied to the cathode electrode by a predetermined step amount, and
wherein the stepwise supply process includes gradually decreasing the amount of the air supplied to the cathode electrode to the second supply amount by the step amount.

4. The fuel cell system according to claim 1,
wherein the stepwise supply process includes gradually decreasing the amount of the air supplied to the cathode electrode to the second supply amount per unit time.

5. The fuel cell system according to claim 1,
wherein the stepwise supply process includes gradually decreasing the amount of the air supplied to the cathode electrode to the second supply amount in increments of a predetermined ratio of the first supply amount.

6. The fuel cell system according to claim 1,
wherein the controller is further configured to execute a pre-power generation supply process for supplying the air to the cathode electrode by controlling the air supply unit before the stack starts power generation.

7. The fuel cell system according to claim 1,
wherein the first supply amount is at least twice the second supply amount.

8. The fuel cell system according to claim 1,
wherein the controller is further configured to execute:
in response to a voltage of the stack being less than a first threshold voltage, a power reduction process for reducing power output from the stack; and
in response to the voltage of the stack being greater than the first threshold voltage, a power increase process for increasing power output from the stack.

9. The fuel cell system according to claim 8,
wherein the power increase process includes increasing the power output from the stack in response to the voltage of the stack being equal to or greater than a second threshold voltage, the second threshold voltage being greater than the first threshold voltage.

10. The fuel cell system according to claim 8,
wherein a power reduction amount in the power reduction process is greater than a power increase amount in the power increase process.

11. The fuel cell system according to claim 10,
wherein the power reduction amount is at least ten time the power increase amount.
